# EUROPEAN PATENT SPECIFICATION

(11) **EP 2 175 103 B1**
(45) Date of publication and mention of the grant of the patent: **03.06.2015**
(21) Application number: 08791494.1
(22) Date of filing: 24.07.2008
(51) Int. Cl.: F01D 5/18, F01D 9/02, F02C 7/18

(54) **TURBINE BLADE**
TURBINENSCHAUFEL
AUBE DE TURBINE

(30) Priority: 31.07.2007 WO PCT/JP2007/065017
(43) Date of publication of application: 14.04.2010
(73) Proprietor: Mitsubishi Hitachi Power Systems, Ltd., 220-8401 Yokohama-shi, Kanagawa (JP)
(72) Inventor: HADA, Satoshi, Takasago-shi Hyogo 676-8686 (JP); HASHIMOTO, Tomoko, Takasago-shi Hyogo 676-8686 (JP); YURI, Masanori, Takasago-shi Hyogo 676-8686 (JP); TSUKAGOSHI, Keizo, Takasago-shi Hyogo 676-8686 (JP)
(74) Representative: Henkel, Breuer & Partner
(86) International application number: PCT/JP2008/063242
(87) International publication number: WO 2009/017015

(56) References cited:
- EP-A1- 1 106 781
- GB-A- 2 107 405
- JP-A- 09 041 903
- JP-A- 09 112 205
- JP-A- 09 303 103
- JP-A- 51 069 708
- JP-A- 2001 012 205
- JP-A- 2003 286 805
- US-A- 4 312 624
- US-A- 5 356 265
- US-A- 5 772 398

## Description

### Technical Field

The present invention relates to gas turbines, and more specifically, to turbine blades (blades/vanes) of gas turbines.

### Background Art

JP 2001-254605 A discloses a known example of a turbine blade (vane) in a turbine unit of a gas turbine.

JP (Sho)62-24606 A also discloses a gas-turbine blade having a dedicated fluid passage for film-cooling at a pressure side.

In addition, JP 2002-242607 A discloses a known cooling structure that particularly copes with thermal load on a blade surface of a gas turbine.

### Disclosure of Invention

However, in the turbine blade disclosed in JP 2001-254605 A, since the environment surrounding the gas turbine blade during operation is such that the pressure on the surface at the suction side (convex side) of the air foil is lower than the pressure on the surface at the pressure side (concave side) of the blade, cooling air introduced into an insert flows more towards the suction side where the pressure is lower. For this reason, in order to ensure a minimum required flow rate of cooling air for cooling the pressure side, it is necessary to increase the flow rate of cooling air to be introduced. There is a problem in terms of lower turbine efficiency because excessive cooling air flows to the suction side of the air foil, causing wasted cooling air to become mixed with combustion gas and thus lowering the temperature of the gas that rotates the turbine.

Although the amount of wasted cooling air can conceivably be decreased by reducing the hole diameter of an impingement plate at the suction side inside the air foil or the hole diameter of film-cooling holes of the air foil, this is problematic in that it leads to difficulty in manufacturing and to clogging of the holes by dust. Furthermore, although the hole diameter of the impingement plate at the suction side can conceivably be the same as that at the pressure side but be reduced in number, this is problematic in that it makes uniform cooling difficult.

With the structure disclosed in JP (Sho)62-24606 A, it is impossible to cope with a reduction in the thickness of the turbine blade, resulting in a lower cooling effect.

With the structure disclosed in JP 2002-242607 A, the blade structure is complex, which results in an increase in the cost of the turbine.

GB 2107405 A discloses a turbine blade for a gas turbine in which the interior of an airfoil is divided into forward and rearward cavities by a transverse partition. Inside the forward and rearward cavities a cylindrical insert is respectively inserted with its outer peripheral walls spaced by a constant small distance from the inner surfaces of the cavities. The inserts are provided with a plurality of film cooling holes. The rearward cavity is additionally divided by a slanting portion into two separate areas, one located towards the suction side and the other located towards the pressure side. The radial inner and outer ends of the airfoil are provided with platform members and the divided areas of the rearward cavity are supplied from different platforms. Thereby it is possible to supply cooling air of different pressure level to the different passages at the suction side and at the pressure side of the rearward cavity.

US 4312624 A discloses a quite similar concept in that the cavity in the interior of the airfoil between radial outer and inner ends respectively attached to platforms is divided along a center line by means of an insert. The suction side cavity is supplied with the cooling air from the radial inner side of the vane whereas the pressure side cavity is supplied from the radial outer side of the vane with the cooling air.

EP 1106781 A discloses a gas turbine engine turbine blade with an airfoil including a longitudinally extending flow channel for receiving compressed air, with the flow channel including a chordally extending imperforate septum dividing the flow channel into first and second laterally spaced apart flow chambers. The blade further includes a supply manifold for receiving the compressed air at a single pressure which is disposed in flow communication with both, the first and second chambers for channeling therein two respective first and second portions of the compressed air.

The present invention has been conceived in light of the circumstances described above, and an object thereof is to provide a turbine blade that can reduce the amount of cooling air (cooling medium) to be used by eliminating wasted cooling air flowing to the suction side (convex side) of the air foil, can effectively cope with a reduction in blade thickness, and can be particularly applied to a high-temperature combustion turbine of 1500°C or higher for better efficiency of the gas turbine.

In order to solve the aforementioned problems, the present invention provides a turbine blade as defined in claim 1 or in claim 4. preferred embodiments are defined in the dependent claims.

A turbine blade according to the present invention includes a air foil provided with a plurality of film-cooling holes, a tabular rib provided between a leading edge and a trailing edge and partitioning the blade into a pressure side and a suction side along a center line connecting the leading edge and the trailing edge, and at least two cavities of which a cavity at the suction side and a cavity at the pressure side do not communicate with each other; and a first impingement plate and/or a second impingement plate, the first impingement plate being disposed within one of the cavities such that a cooling space is formed between an outer peripheral surface thereof and an inner peripheral surface of the air foil, the first impingement plate functioning as a pressure adjustment member and being provided with a plurality of impingement-cooling holes. The second impingement plate is disposed within a shroud. The turbine blade employs a technique in which the pressure of cooling air flowing into and out of the cavity at the suction side is made lower than the pressure of cooling air at the pressure side by means of the first impingement plate and/or the second impingement plate so as to reduce wasted cooling air flowing to the suction side (convex side) of the air foil and thus reduce the overall amount of cooling air (cooling medium) to be used, whereby the reduced air amount is used for the combustion of combustion gas intended for a further increase in output.

With the turbine blade according to the present invention, the first and second impingement plates functioning as pressure adjustment members allow for an increase in channel resistance against cooling air that tries to flow through spaces in the cavities from the pressure side (concave side) to the suction side (convex side) of the air foil so that the cooling air (cooling medium) flowing towards the suction side is reduced, thereby reducing the amount of cooling air to be used.

Furthermore, with the turbine blade according to the present invention, cooling air with low pressure and low flow velocity is, for example, blown out from the film-cooling holes formed at the suction side of a cavity located in the midsection so that a highly persistent cooling air film is uniformly formed along the outer wall surface at the suction side of the air foil.

Consequently, the heat transfer from the combustion gas (high-temperature gas) to the surface of the air foil (more specifically, the outer wall surface at the suction side of the air foil) can be reduced, thereby improving the film cooling efficiency.

The turbine blade may be provided with a second tabular rib that partitions the spaces within the cavities into the pressure side and the suction side along the center line and does not allow the spaces to communicate with each other. This is significantly advantageous because the pressure fluctuation within the cavity at the pressure side does not affect the pressure within the cavity at the suction side during operation. Moreover, the second rib is advantageous in that it can compensate for strength reduction caused by weight reduction of the blade and thickness reduction intended for improving the cooling effect.

According to such a turbine blade, there is no cooling air that tries to flow through the spaces within the cavities from the pressure-side cavity to the suction-side cavity of the air foil so that an optimal amount of cooling air flows to the suction side, thereby ultimately reducing the amount of cooling air to be used during operation of the turbine.

The turbine blade more preferably includes a second impingement plate having a plurality of impingement-cooling holes and disposed upstream of a space located at the suction side of the second rib, such that a cooling medium passing through the impingement-cooling holes formed in the second impingement plate is introduced into the space located at the suction side of the second rib.

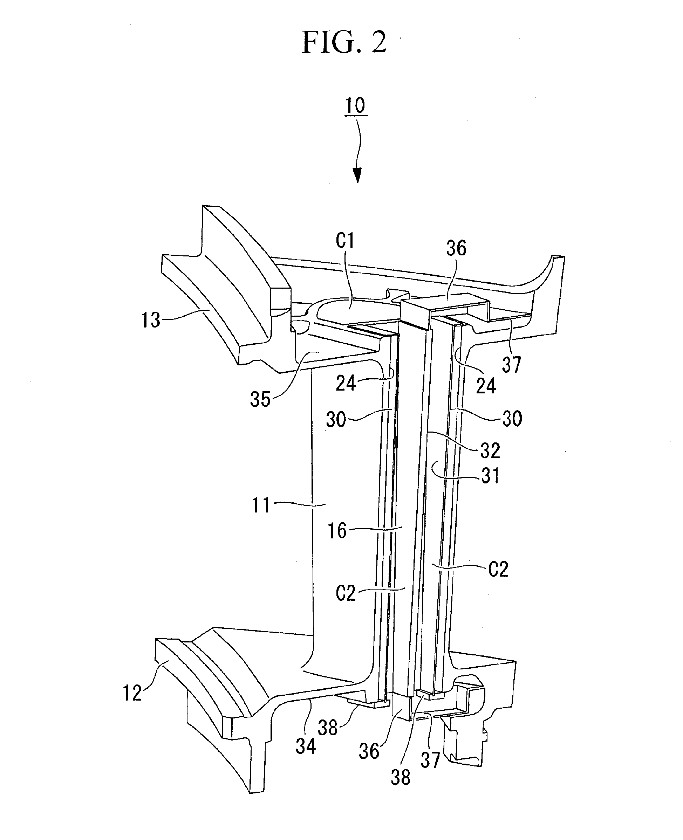

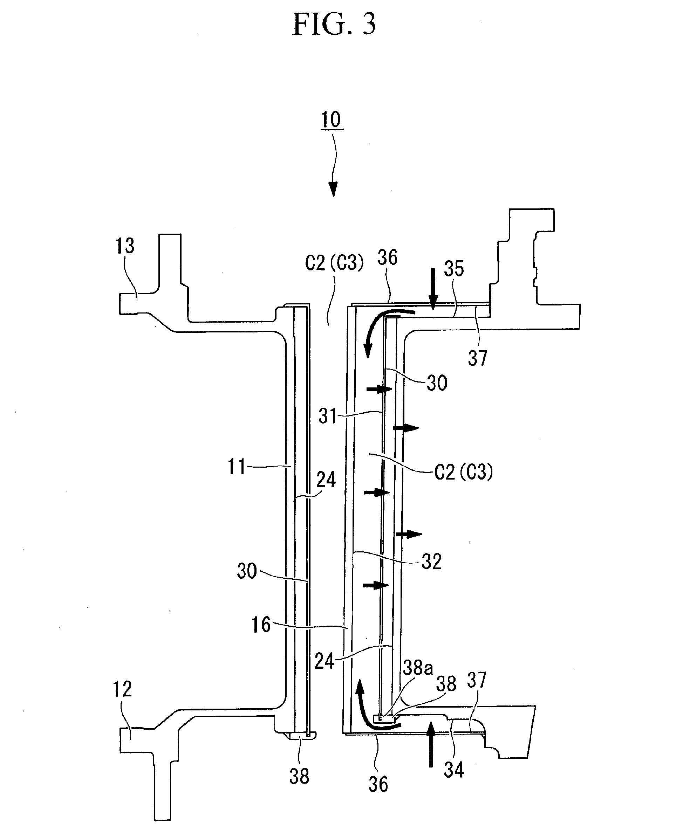

According to such a turbine blade, cooling air supplied (blown out) towards the second impingement plate impingement-cools the second impingement plate and then passes through the impingement-cooling holes formed in the second impingement plate. Subsequently, as shown in Figs. 2 and 3, for example, the cooling air travels through cooling spaces formed between an inner wall surface of the second impingement plate and a surface of an inner shroud and between the inner wall surface of the second impingement plate and a surface of the outer shroud and flows into a space formed, at the suction side of a cavity located in the midsection, by a wall surface of the first rib, a wall surface of the second rib, and an inner wall surface of the first impingement plate. The cooling air flowing into the space formed, at the suction side of the cavity, by the wall surface of the first rib, the wall surface of the second rib, and the inner wall surface of the first impingement plate is blown into a cooling space provided at the suction side of the cavity and formed by an outer wall surface of the first impingement plate, the wall surface of the first rib, and an inner wall surface at the suction side of the air foil through impingement-cooling holes that are open towards the inner wall surface at the suction side of the air foil, so as to impingement-cool the inner wall surface at the suction side of the air foil. Subsequently, the cooling air is blown out from the film-cooling holes.

Specifically, the cooling air, after impingement-cooling the second impingement plate, is used for impingement-cooling the inner wall surface at the suction side of the air foil, as well as for film-cooling the outer wall surface (outer peripheral surface) at the suction side of the air foil without affecting the cooling of the pressure side.

Accordingly, for example, the amount of cooling air flowing into the space formed, at the suction side of the cavity located in the midsection, by the wall surface of the first rib, the wall surface of the second rib, and the inner wall surface of the first impingement plate can be reduced, whereby the overall amount of cooling air (consumption level of cooling air) can be reduced. In addition, low-temperature cooling air that does not contribute to the cooling of the blade is prevented from being blown out from the film-cooling holes.

A gas turbine according to the present invention includes a turbine blade that can reduce the overall amount of cooling air and can prevent low-temperature cooling air from being excessively blown out from film-cooling holes.

With the gas turbine according to the present invention, because the overall amount of cooling air is reduced, the amount of air extracted from a compressor of a previous stage of the turbine is reduced so that a greater amount of air to be used for combustion can be supplied to a combustor. Therefore, the amount of combustion gas in the gas turbine can be increased so as to allow for enhanced performance (output) and prevent unnecessary blow-out of low-temperature cooling air from the film-cooling holes, thereby improving the thermal efficiency of the gas turbine.

According to the present invention, wasted cooling air that flows toward the suction side (convex side) of the air foil is reduced so that the amount of cooling air (cooling medium) to be used can advantageously be reduced.

### Brief Description of Drawings

[FIG. 1] Fig. 1 is a perspective view schematically illustrating a gas turbine equipped with a turbine blade according to the present invention, showing a state where an upper portion of a casing is removed.
[FIG. 2] Fig. 2 is a perspective view of a relevant part of the turbine blade according to a first embodiment of the present invention, taken along a plane substantially orthogonal to a center line connecting a leading edge and a trailing edge thereof.
[FIG. 3] Fig. 3 is a cross-sectional view of the relevant part of the turbine blade according to the first embodiment of the present invention, taken along the plane substantially orthogonal to the center line connecting the leading edge and the trailing edge thereof.
[FIG. 4] Fig. 4 is a cross-sectional view of a relevant part of substantially the midsection of the turbine blade according to the first embodiment of the present invention, taken along a plane substantially orthogonal to an axis extending in the vertical direction thereof.
[FIG. 5] Fig. 5 is a perspective view of an outer shroud of the turbine blade according to the first embodiment of the present invention, as viewed from the outside.
[FIG. 6] Fig. 6 is a cross-sectional view of a relevant part of substantially the midsection of a turbine blade according to a second embodiment of the present invention, taken along a plane substantially orthogonal to an axis extending in the vertical direction thereof.
[FIG. 7] Fig. 7 is a cross-sectional view of a relevant part of a turbine blade according to a third embodiment of the present invention, taken along a plane substantially orthogonal to a center line connecting a leading edge and a trailing edge thereof.

### Explanation of Reference Signs:

- 1:: gas turbine
- 10:: turbine blade
- 11:: air foil
- 14:: film-cooling hole
- 15:: rib (first rib)
- 16:: rib (second rib)
- 24:: inner wall surface (inner peripheral surface)
- 30:: impingement plate (first impingement plate)
- 33:: outer wall surface (outer peripheral surface)
- 36:: impingement plate (second impingement plate)
- 50:: turbine blade
- 60:: turbine blade
- C1:: cavity
- C2:: cavity
- C3:: cavity
- C4:: cavity
- C5:: cavity
- L.E.:: leading edge
- T.E.:: trailing edge

### Best Mode for Carrying Out the Invention

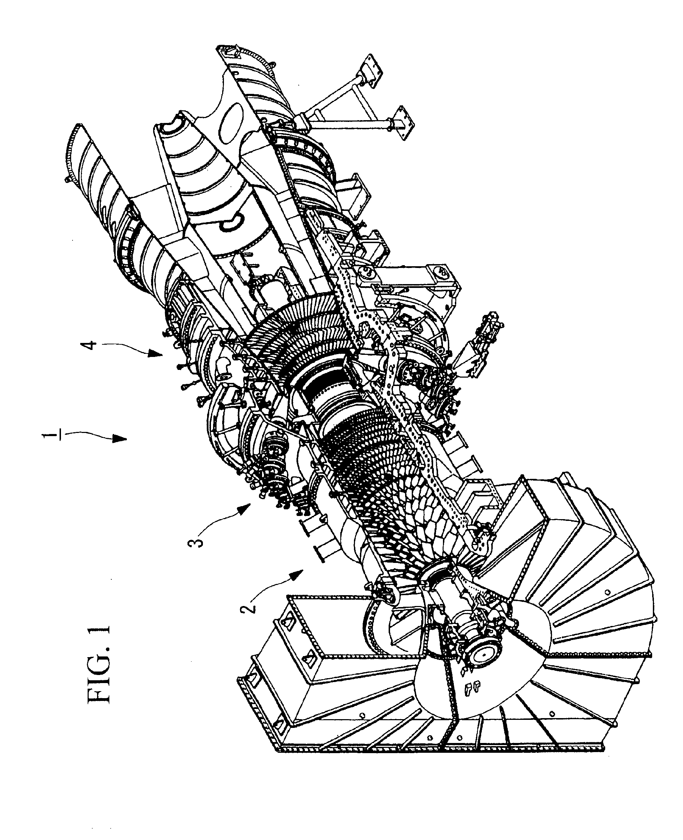

A first embodiment of a turbine blade according to the present invention will be described below with reference to Figs. 1 to 5.

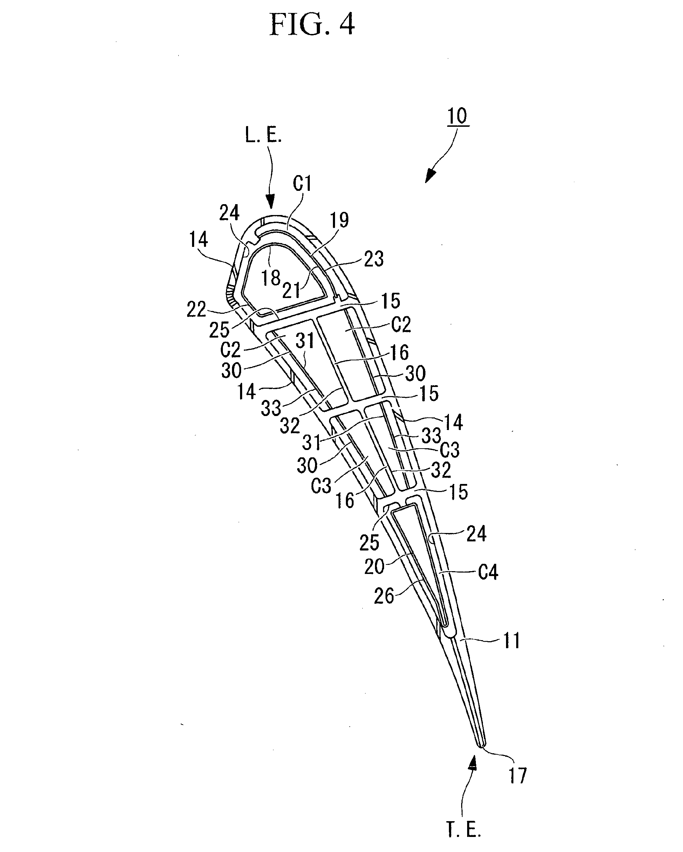

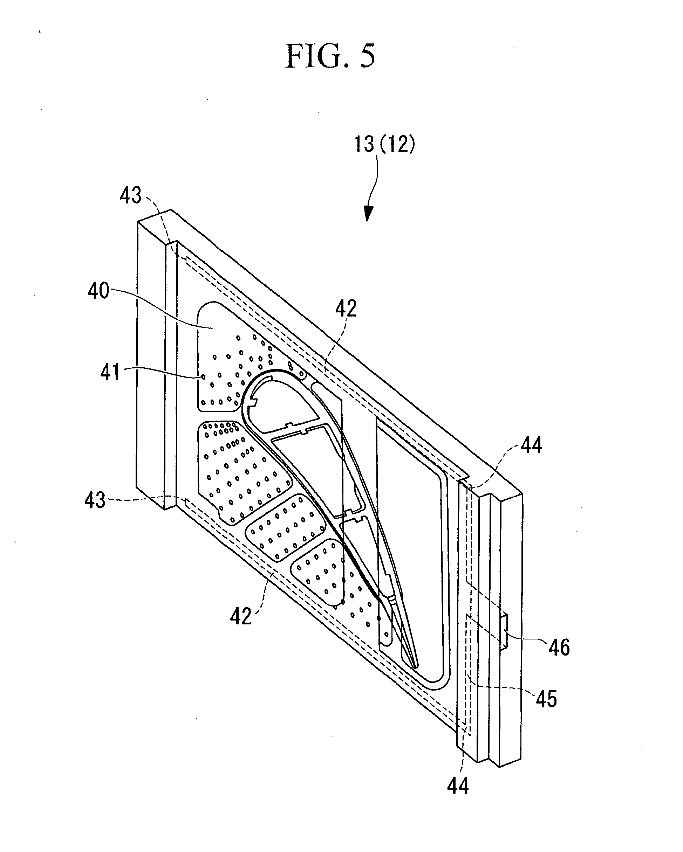

Fig. 1 is a perspective view schematically illustrating a gas turbine equipped with the turbine blade according to the present invention, showing a state where an upper portion of a casing is removed. Fig. 2 is a perspective view of a relevant part of the turbine blade according to this embodiment, taken along a plane substantially orthogonal to a center line connecting a leading edge and a trailing edge thereof. Fig. 3 is a cross-sectional view of the relevant part of the turbine blade according to this embodiment, taken along the plane substantially orthogonal to the center line connecting the leading edge and the trailing edge thereof. Fig. 4 is a cross-sectional view of a relevant part of substantially the midsection of the turbine blade according to this embodiment, taken along a plane substantially orthogonal to an axis extending in the vertical direction thereof. Fig. 5 is a perspective view of an outer shroud of the turbine blade according to this embodiment, as viewed from the outside (the outer peripheral side).

As shown in Fig. 1, a gas turbine 1 is mainly constituted by a compression unit 2 that compresses combustion air, a combustion unit 3 that sprays fuel into high-pressure air sent from the compression unit 2 and combusts the air and fuel so as to generate high-temperature combustion gas, and a turbine unit 4 that is located downstream of the combustion unit 3 and is driven by the combustion gas output from the combustion unit 3.

A turbine blade 10 according to this embodiment is applicable to, for example, a first-stage vane in the turbine unit 4 and includes a air foil 11, an inner shroud 12, and an outer shroud 13, as shown in Figs. 2 and 3.

As shown in Fig. 4, the air foil 11 is provided with a plurality of film-cooling holes 14, tabular ribs (first ribs) 15 that partition the interior of the air foil 11 into a plurality of (four in this embodiment) cavities C1, C2, C3, and C4 and provided substantially orthogonally to a center line (not shown) connecting a leading edge L.E. and a trailing edge T.E. in a cross section taken substantially orthogonally to an axis extending in the vertical direction of the air foil 11, tabular ribs (second ribs) 16 that partition (substantially bisect) each of the cavities C2 and C3 located in the midsection (the cavities other than the cavity C1 located most adjacent to the leading edge and the cavity C4 located most adjacent to the trailing edge) into the pressure side and the suction side, and an air hole 17 that has a plurality of pin fins (not shown) and guides cooling air (a cooling medium) in the cavity C4 located most adjacent to the trailing edge outward from the air foil 11.

The tabular ribs 16 prevent the cooling air from moving from the pressure side towards the suction side within the blade, and therefore has an effect of making the pressure within the cavities at the suction side differ from the pressure within the cavities at the pressure side.

The cavity C1 located most adjacent to the leading edge contains (accommodates) an insert 18 and an impingement plate 19, and the cavity C4 located most adjacent to the trailing edge contains (accommodates) an insert 20.

The inserts 18 and 20 have a hollow shape provided with a plurality of impingement-cooling holes (not shown), and the impingement plate 19 has a tabular shape provided with a plurality of impingement-cooling holes (not shown).

The insert 18 is disposed at the pressure side inside the cavity C1, whereas the impingement plate 19 is disposed such that an inner wall surface (inner peripheral surface) 21 thereof faces an outer wall surface (outer peripheral surface) 22 located at the suction side of the insert 18 and an outer wall surface (outer peripheral surface) 23 thereof faces an inner wall surface 24 located at the suction side of the air foil 11.

Cooling spaces, that is, cooling-air passages, are respectively formed between the outer wall surface 22 of the insert 18 and the inner wall surface 24 located at the pressure side of the air foil 11; between the outer wall surface 22 of the insert 18 and a wall surface 25 of one of the rib 15; between the outer wall surface 22 of the insert 18 and the inner wall surface 21 of the impingement plate 19; and between the outer wall surface 23 of the impingement plate 19, the inner wall surface 24 located at the suction side of the air foil 11, and the wall surface 25 of one of the rib 15.

The insert 20 is disposed within the cavity C4, and cooling spaces, that is, cooling-air passages, are respectively formed between an outer wall surface (outer peripheral surface) 26 of the insert 20 and the inner wall surface 24 of the air foil 11, as well as between the outer wall surface 26 of the insert 20 and a wall surface 25 of the ribs 15.

Cooling air is introduced into the inserts 18 and 20 by using means not shown in the drawings and is blown into the cooling spaces via the plurality of impingement-cooling holes so that the inner wall surface 24 of the air foil 11 is impingement-cooled.

The cooling air, after impingement-cooling the inner wall surface 24 of the air foil 11, is blown out from the plurality of film-cooling holes 14 of the air foil 11 so as to form a film of cooling air around the air foil 11, thereby film-cooling the air foil 11.

Moreover, the cooling air is blown out from the trailing edge of the air foil 11 through the air hole 17 while cooling the pin fins so as to cool the vicinity of the trailing edge of the air foil 11.

Furthermore, after the cooling air is introduced into the insert 18 and blown into the cooling spaces via the impingement-cooling holes that are open towards the inner wall surface 24 at the pressure side of the air foil 11 so as to impingement-cool the inner wall surface 24 at the pressure side of the air foil 11, a portion of the cooling air is made to flow into the cooling space formed between the outer wall surface 22 of the insert 18 and the inner wall surface 21 of the impingement plate 19 via the cooling space formed between the outer wall surface 22 of the insert 18 and the inner wall surface 24 of the air foil 11 and the cooling space formed between the outer wall surface 22 of the insert 18 and the wall surface 25 of the corresponding rib 15. Then, the cooling air flowing into the cooling space formed between the outer wall surface 22 of the insert 18 and the inner wall surface 21 of the impingement plate 19 is blown into the cooling spaces via the impingement-cooling holes that are open towards the inner wall surface 24 at the suction side of the air foil 11, so as to impingement-cool the inner wall surface 24 at the suction side of the air foil 11, and is subsequently blown out from the film-cooling holes 14.

On the other hand, the cavities C2 and C3 located in the midsection each contain (accommodate) an impingement plate 30.

Each impingement plate 30 has a tabular shape provided with a plurality of impingement-cooling holes (not shown), and is disposed such that an inner wall surface (inner peripheral surface) 31 thereof faces a wall surface 32 of the corresponding rib 16 and an outer wall surface (outer peripheral surface) 33 thereof faces the inner wall surface 24 of the air foil 11.

Cooling spaces, that is, cooling-air passages, are formed between the outer wall surfaces 33 of the impingement plates 30, the inner wall surface 24 of the air foil 11, and the wall surfaces 25 of the ribs 15.

As shown in Figs. 2 and 3, the inner shroud 12 is provided at the inner side (inner peripheral side) of the air foil 11, whereas the outer shroud 13 is provided at the outer side (outer peripheral side) of the air foil 11.

A surface (lower surface in Figs. 2 and 3) 34 of the inner shroud 12 and a surface (upper surface in Figs. 2 and 3) 35 of the outer shroud 13 are each provided with an impingement plate 36.

Each impingement plate 36 has a tabular shape provided with a plurality of impingement-cooling holes (not shown), and is disposed so as to cover the upper side or the lower side of spaces formed, at the suction side relative to the wall surfaces 32 of the ribs 16, in the cavities C2 and C3 located in the midsection (namely, spaces surrounded by the wall surfaces 25 of the ribs 15, the wall surfaces 32 of the ribs 16, and the inner wall surface 24 of the air foil 11).

Cooling spaces, namely, cooling-air passages, that guide the cooling air passing through the impingement-cooling holes formed in the impingement plates 36 toward the spaces formed, at the suction side relative to the wall surfaces 32 of the ribs 16, in the cavities C2 and C3 located in the midsection are respectively formed between inner wall surfaces 37 of the impingement plates 36 and the surface 34 of the inner shroud 12, as well as between the inner wall surfaces 37 of the impingement plates 36 and the surface 35 of the outer shroud 13.

The spaces formed, at the suction side relative to the wall surfaces 32 of the ribs 16, in the cavities C2 and C3 located in the midsection can be supplied with only the cooling air passing through the impingement-cooling holes formed in the impingement plates 36.

Furthermore, the cooling air, after impingement-cooling the impingement plates 36, flows into the spaces formed, at the suction side relative to the wall surfaces 32 of the ribs 16, in the cavities C2 and C3 located in the midsection and is blown into the cooling spaces via the impingement-cooling holes that are open towards the inner wall surface 24 at the suction side of the air foil 11, so as to impingement-cool the inner wall surface 24 at the suction side of the air foil 11. Subsequently, the cooling air is blown out from the film-cooling holes 14.

As shown in Fig. 3, inlet sections, adjacent to the inner shroud 12, for the spaces formed, at the suction side relative to the wall surfaces 32 of the ribs 16, in the cavities C2 (C3) located in the midsection (namely, spaces formed between the wall surfaces 32 of the ribs 16 and the inner wall surfaces 31 of the corresponding impingement plates 30) respectively have impingement backing plates 38 fixed thereto along the inner wall surface 24 at the suction side and the pressure side of the air foil 11. In order to seal the cooling air while absorbing thermal expansion differences in the impingement plates 30 in the vertical direction of the blade, one end of each impingement plate 30 (a lower end in Fig. 3) is configured to be fitted in a groove 38a provided in the corresponding impingement backing plate 38. By sliding the one end of the impingement plate 30 within the groove 38a, the impingement plate 30 can be expanded or contracted in the vertical direction of the blade.

Furthermore, as shown in Fig. 5, the surface 34 of the inner shroud 12 (see Figs. 2 and 3) and the surface 35 of the outer shroud 13 (see Figs. 2 and 3) are each provided with an impingement plate 40.

Each impingement plate 40 has a tabular shape provided with a plurality of impingement-cooling holes 41 and is disposed so as to cover the upstream pressure side and the upstream leading-edge side of the air foil 11 from above or below.

Cooling spaces, namely, cooling-air passages, that guide the cooling air passing through the impingement-cooling holes 41 formed in the impingement plates 40 toward leading-edge opening ends 43 of side channels 42 are respectively formed between an inner wall surface (not shown) of one impingement plate 40 and the surface 34 of the inner shroud 12, as well as between the inner wall surface (not shown) of the other impingement plate 40 and the surface 35 of the outer shroud 13.

The side channels 42 are cooling-air passages formed along both sides of each of the inner shroud 12 and the outer shroud 13 from the leading edge toward the trailing edge, and trailing-edge opening ends 44 thereof are connected to an end section that corresponds to a header 45 formed in a trailing-edge section of each of the inner shroud 12 and the outer shroud 13 along the width direction thereof. An inner wall surface of each side channel 42 is provided with a plurality of tabular protrusions (turbulators), which are not shown.

The header 45 is a cooling-air passage that guides the cooling air, flowing into the side channels 42 from the leading-edge opening ends 43 of the side channels 42, toward a trailing-edge channel 46 formed in the trailing-edge section of each of the inner shroud 12 and the outer shroud 13.

The cooling air passing through the impingement-cooling holes 41 formed in each impingement plate 40 flows into the side channels 42 from the leading-edge opening ends 43 of the side channels 42, passes through the side channels 42, the headers 45, and the trailing-edge channels 46, and is subsequently released from the trailing edges of the inner shroud 12 and the outer shroud 13. In this case, the leading edges, both side sections, and the trailing edges of the inner shroud 12 and the outer shroud 13 are cooled by the cooling air.

In the turbine blade 10 having such a configuration, the cooling air supplied (blown out) towards the impingement plates 36 impingement-cools the impingement plates 36, then passes through the impingement-cooling holes formed in the impingement plates 36, travels through the cooling spaces formed between the inner wall surface 37 of one impingement plate 36 and the surface 34 of the inner shroud 12 and between the inner wall surface 37 of the other impingement plate 36 and the surface 35 of the outer shroud 13 so as to flow into the spaces located at the suction side of the cavities C2 and C3 in the midsection and formed by the wall surfaces 25 of the ribs 15, the wall surfaces 32 of the ribs 16, and the inner wall surfaces 31 of the impingement plates 30. The cooling air flowing into the spaces located at the suction side of the cavities C2 and C3 in the midsection and formed by the wall surfaces 25 of the ribs 15, the wall surfaces 32 of the ribs 16, and the inner wall surfaces 31 of the impingement plates 30 is blown into the cooling spaces formed by the outer wall surfaces 33 of the impingement plates 30, the wall surfaces 25 of the ribs 15, and the inner wall surface 24 at the suction side of the air foil 11 via the impingement-cooling holes, which are provided at the suction side of the cavities C2 and C3 and are open towards the inner wall surface 24 at the suction side of the air foil 11, so as to impingement-cool the inner wall surface 24 at the suction side of the air foil 11. Subsequently, the cooling air is blown out from the film-cooling holes 14.

On the other hand, cooling air is directly introduced (supplied) into spaces located at the pressure side of the cavities C2 and C3 in the midsection and formed by the wall surfaces 25 of the ribs 15, the wall surfaces 32 of the ribs 16, and the inner wall surfaces 31 of the impingement plates 30 by using means not shown in the drawings. The cooling air flowing into the spaces located at the pressure side of the cavities C2 and C3 and formed by the wall surfaces 25 of the ribs 15, the wall surfaces 32 of the ribs 16, and the inner wall surfaces 31 of the impingement plates 30 is blown into the cooling spaces formed by the outer wall surfaces 33 of the impingement plates 30, the wall surfaces 25 of the ribs 15, and the inner wall surface 24 at the pressure side of the air foil 11 via the impingement-cooling holes that are provided at the pressure side of the cavities C2 and C3 and are open towards the inner wall surface 24 at the pressure side of the air foil 11, so as to impingement-cool the inner wall surface 24 at the pressure side of the air foil 11. Subsequently, the cooling air is blown out from the film-cooling holes 14.

The cooling air introduced into the inserts 18 and 20 by using means that are not shown is blown into the cooling spaces via the plurality of impingement holes so as to impingement-cool the inner wall surface 24 of the air foil 11.

The cooling air, after impingement-cooling the inner wall surface 24 of the air foil 11, is blown out from the plurality of film-cooling holes 14 of the air foil 11 so as to form a film of cooling air around the air foil 11, thereby film-cooling the air foil 11.

Furthermore, in the turbine blade 10 according to this embodiment, after the cooling air is introduced into the insert 18 and blown into the cooling spaces via the impingement-cooling holes that are open towards the inner wall surface 24 at the pressure side of the air foil 11 so as to impingement-cool the inner wall surface 24 at the pressure side of the air foil 11, a portion of the cooling air passes through the cooling space formed between the outer wall surface 22 of the insert 18 and the inner wall surface 24 of the air foil 11 and the cooling space formed between the outer wall surface 22 of the insert 18 and the wall surface 25 of the corresponding rib 15 so as to flow into the cooling space formed between the outer wall surface 22 of the insert 18 and the inner wall surface 21 of the impingement plate 19. The cooling air flowing into the cooling space formed between the outer wall surface 22 of the insert 18 and the inner wall surface 21 of the impingement plate 19 is blown into the cooling spaces via the impingement holes that are open towards the inner wall surface 21 at the suction side of the air foil 11, so as to impingement-cool the inner wall surface 24 at the suction side of the air foil 11, and is subsequently blown out from the film-cooling holes 14.

Furthermore, after the cooling air is introduced into the insert 20 and blown into the cooling spaces via the impingement-cooling holes that are open towards the inner wall surface 24 of the air foil 11 so as to impingement-cool the inner wall surface 24 of the air foil 11, a portion of the cooling air passes through the cooling space formed between the outer wall surface 26 of the insert 20 and the inner wall surface 24 of the air foil 11 and through the air hole 17 so as to cool the pin fins, and is subsequently blown out from the trailing edge of the air foil 11.

Moreover, in the turbine blade 10 according to this embodiment, the cooling air passing through the impingement-cooling holes 41 formed in the impingement plates 40 uniformly flows toward the leading-edge opening ends 43 of the side channels 42, and the cooling air flowing into the side channels 42 from the leading-edge opening ends 43 of the side channels 42 passes through the side channels 42, which are linear channels, and the headers 45 and is subsequently released from the trailing edges of the inner shroud 12 and the outer shroud 13 via the trailing-edge channels 46.

With the turbine blade 10 according to this embodiment, the cooling air, after impingement-cooling the impingement plates 36, is used for impingement-cooling the inner wall surface 24 at the suction side of the air foil 11, as well as for film-cooling the outer wall surface (outer peripheral surface) at the suction side of the air foil 11.

Accordingly, the amount of cooling air flowing into the spaces located at the suction side of the cavities C2 and C3 in the midsection and formed by the wall surfaces 25 of the ribs 15, the wall surfaces 32 of the ribs 16, and the inner wall surfaces 31 of the impingement plates 30 can be reduced so that the overall amount of cooling air (consumption level of cooling air) can be reduced, and cooling air with low temperature and whose cooling capacity is not sufficiently utilized can be prevented from being blown out from the film-cooling holes 14.

Furthermore, with the turbine blade 10 according to this embodiment, cooling air with low pressure and low flow velocity is blown out from the film-cooling holes 14 formed at the suction side of the cavities C2 and C3 located in the midsection so that a highly persistent cooling air film is uniformly formed air along the outer wall surface at the suction side of the air foil 11.

Consequently, the heat transmission from the combustion gas (high-temperature gas) to the surface of the air foil 11 (more specifically, the outer wall surface at the suction side of the air foil 11) can be reduced, thereby improving the film cooling efficiency.

Furthermore, with the turbine blade 10 according to this embodiment, since the channels that guide the cooling air flowing in from the leading-edge opening ends 43 of the side channels 42 towards the trailing edges of the inner shroud 12 and the outer shroud 13 (downstream opening ends of the trailing-edge channels 46) each have only two bent sections, namely, a joint (communication) section between the trailing-edge opening end 44 of the side channel 42 and an end of the header 45 and a joint (communication) section between a midsection of the header 45 and an upstream opening end of the trailing-edge channel 46, a loss of pressure (channel resistance) occurring at the bent sections of the channel can be reduced, thereby increasing the flow velocity of the cooling air and efficiently cooling the inner shroud 12 and the outer shroud 13. In addition, the amount of cooling air flowing into the cooling spaces formed between the inner wall surface of one impingement plate 40 and the surface 34 of the inner shroud 12 and between the inner wall surface of the other impingement plate 40 and the surface 35 of the outer shroud 13 can be reduced, whereby the overall amount of cooling air (consumption level of cooling air) can be further reduced.

In the gas turbine 1 equipped with the turbine blade 10 according to this embodiment, since unnecessary cooling air that does not contribute to the cooling of the gas turbine is mixed with the combustion gas and thus does not lower the temperature of the combustion gas, the performance of the gas turbine can be enhanced. In addition, by reducing the amount of cooling air extracted from the compressor part, the reduced overall amount of compressed air can be used as air for gas combustion, whereby the amount of combustion gas to be introduced and completely combusted can be increased. In consequence, since the total amount of combustion gas increases, the turbine output can be improved without having to increase the size of the compressor part, and size reduction and high output of the turbine can be achieved, thereby advantageously resulting in higher performance. Because the ribs 16 contribute to the improvement in the strength of the blade, the blade can advantageously be reduced in thickness. Moreover, optimization of the amount of cooling air at the suction side and the pressure side of the blade can advantageously be controlled independently with a simple structure.

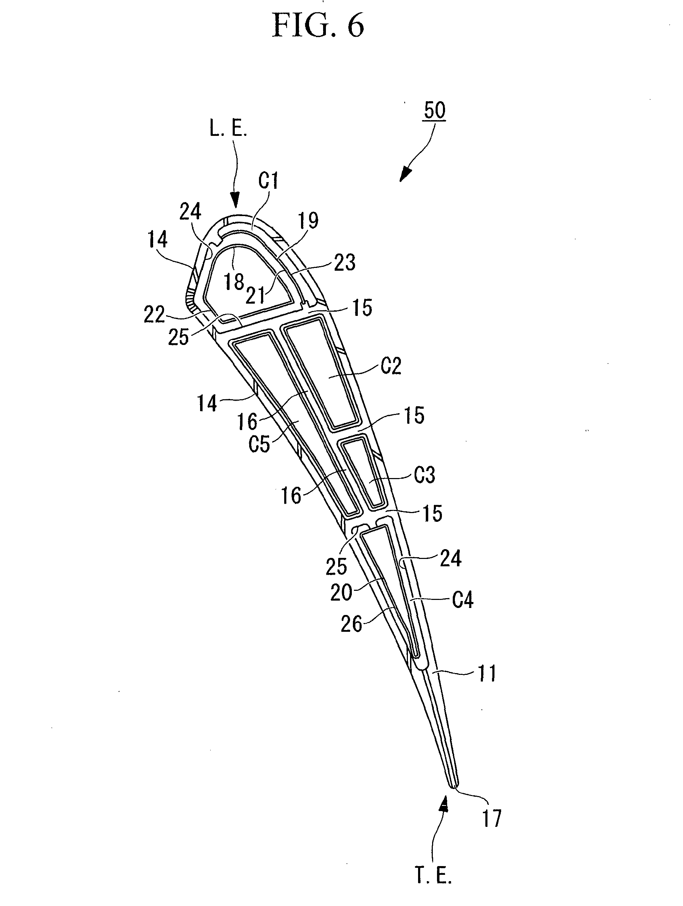

A second embodiment of the turbine blade according to the present invention will now be described with reference to Fig. 6. Fig. 6 is a cross-sectional view of a relevant part of substantially the midsection of the turbine blade according to this embodiment, taken along a plane substantially orthogonal to an axis extending in the vertical direction thereof.

As shown in Fig. 6, a turbine blade 50 according to this embodiment differs from that in the above-described embodiment in that a single cavity C5 is provided in place of two of the cavities C2 and C3 (cavities other than the cavity C1 located most adjacent to the leading edge and the cavity C4 located most adjacent to the trailing edge) located at the pressure side of the midsection. Since other components are the same as those in the above-described embodiment, the description of those components will be omitted.

In this embodiment, the tabular ribs 15 and the tabular ribs 16 are formed such that the rib 15 that partitions the cavities C2 and C3 located at the suction side of the midsection respectively into the leading-edge side and the trailing-edge side and the ribs 16 that partition (substantially bisect) the cavities C2 and C3 located at the suction side of the midsection and the cavity C5 located at the pressure side of the midsection respectively into the pressure side and the suction side intersect with each other so as to form a T-shape (that is, the rib 15 and the ribs 16 substantially form a T-shape in cross section).

With the turbine blade 50 according to this embodiment, since the cavities C2 and C3 located at the suction side of the midsection are respectively partitioned into the leading-edge side and the trailing-edge side by the rib 15, the strength against bulging stress can be enhanced at the suction side.

Furthermore, with the turbine blade 50 according to this embodiment, since a rib 15 for partitioning a cavity located at the pressure side of the midsection into the leading-edge side and the trailing-edge side is not necessary, the structure of the cavity C5 located at the pressure side of the midsection can be simplified, thereby allowing for an easier casting process during manufacturing and a reduction in the manufacturing costs.

Moreover, with the turbine blade 50 according to this embodiment, since the number of ribs 15, which are difficult to cool, is reduced, the cooling efficiency of the cavity C5 located at the pressure side of the midsection can be enhanced.

Other advantages are the same as those in the above-described embodiment, and a description thereof will thus be omitted.

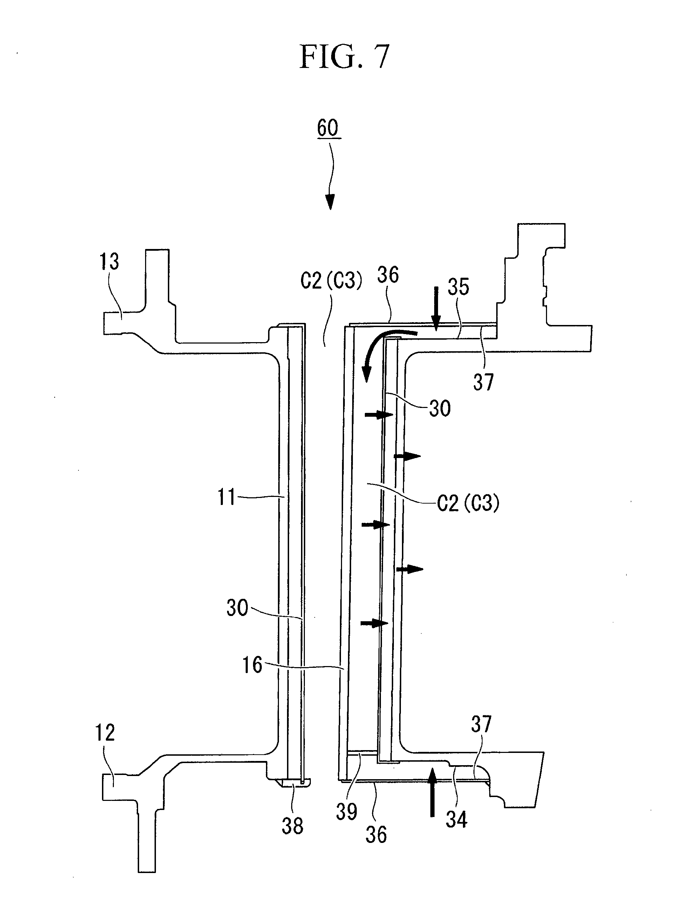

A third embodiment of the turbine blade according to the present invention will now be described with reference to Fig. 7. Fig. 7 is a cross-sectional view of a relevant part of the turbine blade according to this embodiment, taken along a plane substantially orthogonal to a center line connecting a leading edge and a trailing edge thereof.

As shown in Fig. 7, a turbine blade 60 according to this embodiment differs from those in the above-described embodiments in that a partition plate 39 is provided in place of the impingement backing plate 38 provided on a side of the space formed in each cavity C2 (C3), located in the midsection, at the suction side relative to the wall surface 32 of the corresponding rib 16. Since other components are the same as those in the above-described embodiments, the description of those components will be omitted.

Specifically, the above-described embodiments employ a so-called "double-side supply method" in which the cooling air, after impingement-cooling the impingement plates 36 respectively provided in the inner shroud 12 and the outer shroud 13, flows into the space formed in each cavity C2 (C3), located in the midsection, at the suction side relative to the wall surface 32 of the corresponding rib 16, as shown in Fig. 2 or 3.

In contrast, in this embodiment, of the spaces formed in the cavities C2 (C3) located in the midsection, at the suction side relative to the wall surfaces 32 of the ribs 16, the space that is closer to the leading edge communicates, at one side (the upper side in Fig. 7), with the outer shroud 13 and is blocked, at the other side (the lower side in Fig. 7), by a partition plate 39 fixed to one end (lower end in Fig. 7) of the corresponding impingement plate 30, as shown in Fig. 7. At the same time, the space that is closer to the trailing edge communicates, at the other side, with the inner shroud 12 and is blocked, at one side, by a partition plate 39 (not shown) fixed to the other end (upper end in Fig. 7) of the other impingement plate 30. In other words, a so-called "single-side supply method" is employed in which the cooling air to be supplied to the space closer to the leading edge only includes cooling air that has impingement-cooled the impingement plate 36 of the outer shroud 13, but is not supplied from the inner shroud 12 side. On the other hand, the cooling air to be supplied to the space closer to the trailing edge only includes cooling air that has impingement-cooled the impingement plate 36 of the inner shroud 12, but the cooling air is not supplied from the outer shroud 13 side.

Alternatively, the space closer to the leading edge in this embodiment may communicate, at the other side, with the inner shroud 12 and be blocked, at one side, by the partition plate 39 fixed to the other end of the corresponding impingement plate 30, whereas the space closer to the trailing edge may communicate, at one side, with the outer shroud 13 and be blocked, at the other side, by the partition plate 39 (not shown) fixed to one end of the other impingement plate 30.

In the turbine blade 60 according to this embodiment, the partition plates 39 are each fixed in contact with the corresponding impingement plate 30 so that a seal is ensured at the joint section between the partition plate 39 and the impingement plate 30, thereby properly preventing the cooling air from leaking through the joint section.

Because the above-described embodiments have a structure in which one end of each impingement plate 30 is fitted in the corresponding impingement backing plate 38, the cooling air may sometimes slightly leak through between the one end of the impingement plate 30 and the groove 38a in the impingement backing plate 38.

Other advantages are the same as those in the above-described embodiments, and a description thereof will thus be omitted.

The present invention is not only applicable to a first-stage vane, but also to a vane or blade of another stage.

Furthermore, the present invention is applicable not only to the cavities C2 and C3 located in the midsection (the cavities other than the cavity C1 located most adjacent to the leading edge and the cavity C4 located most adjacent to the trailing edge), but also to the cavity C1 located most adjacent to the leading edge and/or the cavity C4 located most adjacent to the trailing edge.

## Claims

1. A turbine blade (10;50;60) in which a tabular rib (16) partitioning an interior of an air foil (11) into a pressure side and a suction side along a center line connecting a leading edge and a trailing edge of the air foil (11) is provided in a portion between the leading edge and the trailing edge so as to form at least two cavities (C2,C3;C2,C3;C5), of which a cavity (C2,C3) at the suction side and a cavity (C2,C3;C5) at the pressure side do not communicate with each other, and
wherein the turbine blade (10;50;60) comprises pressure adjustment members (36,30) for cooling air flowing into the cavity (C2,C3) at the suction side and for cooling air flowing out of the cavity (C2,C3) at the suction side,
**characterised in that** the pressure adjustment members comprise an impingement plate (36) located upstream of the cooling air flowing into the cavity (C2,C3) at the suction side and disposed so as to cover an upper side and/or a lower side of spaces formed in the cavity (C2,C3) at the suction side.

2. The turbine blade (10;50;60) according to claim 1, wherein the impingement plate (36) is located upstream of the cooling air flowing into the cavity (C2,C3) at the suction side and is disposed so as to cover an upper side and/or a lower side of spaces formed in the cavity (C2,C3) at the suction side so that the cavity (C2,C3) at the suction side is supplied with only cooling air passing through the impingement plate(s) (36).

3. The turbine blade (10;50;60) according to claim 1 or 2, wherein the pressure adjustment members comprise an impingement plate (30) located upstream of the cooling air flowing out of the cavity (C2,C3) at the suction side.

4. A turbine blade (10;50;60) in which a tabular rib (16) partitioning an interior of an air foil (11) into a pressure side and a suction side along a center line connecting a leading edge and a trailing edge of the air foil (11) is provided between the leading edge and the trailing edge so as to form at least two cavities (C2,C3;C2,C3;C5), of which a cavity (C2,C3) at the suction side and a cavity (C2,C3;C5) at the pressure side do not communicate with each other,
wherein the turbine blade (10;50;60) comprises a passage for cooling air to be supplied to the cavity (C2,C3;C5) at the pressure side and to flow out of film-cooling holes (14) at the pressure side of the air foil (11) and a passage for cooling air to be supplied to the cavity (C2,C3) at the suction side and to flow out of film-cooling holes (14) at the suction side of the air foil (11), said passages provided with the pressure adjustment members (30,36), **characterised in that**
the number of pressure adjustment members (30) provided in the passage for cooling air to be supplied to the cavity (C2,C3;C5) at the pressure side is smaller than the number of pressure adjustment members (30,36) provided in the passage for cooling air at the suction side, and
the pressure adjustment member provided in the passage for the cooling air supplied to the cavity (C2,C3) at the suction side comprises the impingement plate (36) provided upstream of cooling air flowing into the cavity (C2,C3) at the suction side and an impingement plate (30) provided upstream of the film-cooling holes (14) at the suction side.

5. The turbine blade according to claim 4, wherein the pressure adjustment member provided in the passage for the cooling air supplied to the cavity (C2,C3;C5) at the pressure side comprises an impingement plate (30) provided upstream of the film-cooling holes (14) at the pressure side.

6. A gas turbine comprising the turbine blade according to any one of claims 1 to 5.

7. The gas turbine according to claim 6, wherein the diameter of impingement holes of the pressure adjustment members (30,36) of the turbine blades varies between stages.

## Patentansprüche

1. Eine Turbinenschaufel (10;50;60), in der eine tafelförmige Rippe (16), die ein Inneres eines Profils (11) in eine Druckseite und eine Saugseite entlang einer eine Vorderkante und eine Hinterkante des Profils (11) verbindenden Mittellinie unterteilt, in einem Abschnitt zwischen der Vorderkante und Hinterkante so vorgesehen ist, dass mindestens zwei Hohlräume (C2,C3;C2,C3;C5) gebildet sind, von denen ein Hohlraum (C2,C3) an der Saugseite und ein Hohlraum (C2,C3;C5) an der Druckseite nicht miteinander kommunizieren, und
wobei die Turbinenschaufel (10;50;60) Druckeinstellelemente (36,30) für in den Hohlraum (C2,C3) an der Saugseite einströmende Kühlluft und für aus dem Hohlraum (C2,C3) an der Saugseite ausströmende Luft aufweist,
**dadurch gekennzeichnet, dass** die Druckeinstellelemente eine Prallplatte (36) umfassen, die sich stromauf der in den Hohlraum (C2,C3) an der Saugseite einströmenden Kühlluft befinden und so angeordnet sind, dass sie eine oberen Seite und/oder eine untere Seite von in dem Hohlraum (C2,C3) an der Saugseite ausgebildeten Räumen abdecken.

2. Die Turbinenschaufel (10;50;60) gemäß Anspruch 1, wobei die Prallplatte (36) stromauf der in den Hohlraum (C2,C3) an der Saugseite einströmenden Kühlluft angeordnet ist und so angeordnet ist, dass sie eine obere Seite und/oder eine untere Seite von in dem Hohlraum (C2,C3) an der Saugseite ausgebildeten Räumen abdecken, sodass der Hohlraum (C2,C3) an der Saugseite nur mit durch die Prallplatte(n) (36) passierender Kühlluft versorgt ist.

3. Die Turbinenschaufel (10;50;60) gemäß Anspruch 1 oder 2, wobei die Druckeinstellelemente eine Prallplatte (30) stromauf der aus dem Hohlraum (C2,C3) an der Saugseite ausströmenden Kühlluft umfassen.

4. Eine Turbinenschaufel (10;50;60), in der eine tafelförmige Rippe (16), die ein Inneres eines Profil (11) in eine Druckseite und eine Saugseite entlang einer eine Vorderkante und eine Hinterkante des Profils (11) verbindenden Mittellinie unterteilt, zwischen der Vorderkante und der Hinterkante so vorgesehen ist, dass mindestens zwei Hohlräume (C2,C3;C2,C3;C5) gebildet sind, von denen ein Hohlraum (C2, C3) an der Saugseite und eine Hohlraum (C2,C3;C5) an der Druckseite nicht miteinander kommunizieren,
wobei die Turbinenschaufel (10;50;60) einen Durchgang für Kühlluft, die dem Hohlraum (C2,C3;C5) an der Druckseite zuzuführen ist, und die aus Schicht-Kühllöchern (14) an der Druckseite des Profils (11) ausströmen soll, und einen Durchgang für Kühlluft, die dem Hohlraum (C2,C3) an der Saugseite zuzuführen ist und die aus Schicht-Kühllöchern (14) an der Saugseite des Profils (11) ausströmen soll, aufweist, wobei die Durchgänge mit den Druckeinstellelementen (30,36) versehen sind,
**dadurch gekennzeichnet, dass**:
die Anzahl von Druckeinstellelementen (30), die in dem Durchgang für Kühlluft, die dem Hohlraum (C2,C3;C5) an der Druckseite zuzuführen ist, vorgesehen sind kleiner ist als die Anzahl von Druckeinstellelementen (30,36), die in dem Durchgang für Kühlluft an der Saugseite vorgesehen sind, und
das Druckeinstellelement, das in dem Durchgang für die dem Hohlraum (C2,C3) an der Saugseite zugeführte Kühlluft vorgesehen ist, die Prallplatte (36), die stromauf von in den Hohlraum (C2,C3) an der Saugseite einströmender Kühlluft vorgesehen ist, und eine Prallplatte (30), die stromauf der Schicht-Kühllöcher (14) an der Saugseite vorgesehen ist, aufweist.

5. Die Turbinenschaufel gemäß Anspruch 4, wobei das Druckeinstellelement, das in dem Durchgang für die dem Hohlraum (C2,C3;C5) an der Druckseite zugeführte Kühlluft vorgesehen ist, eine Prallplatte (30) aufweist, die stromauf der Schicht-Kühllöcher (14) an der Druckseite vorgesehen ist.

6. Eine Gasturbine mit der Turbinenschaufel gemäß einem der Ansprüche 1 bis 5.

7. Die Gasturbine gemäß Anspruch 6, wobei der Durchmesser von Pralllöchern der Druckeinstellelemente (30,36) der Turbinenschaufeln zwischen den Stufen variiert.

## Revendications

1. Aube (10 ; 50 ; 60) de turbine, dans laquelle une nervure (16) tabulaire, séparant l'intérieur d'une aile (11) aérodynamique en un intrados et en un extrados le long d'une ligne centrale reliant un bord d'attaque et un bord de fuite de l'aile (11) aérodynamique, est prévue dans une partie entre le bord d'attaque et le bord de fuite, de manière à former au moins deux cavités (C2, C3 ; C2, C3 ; C5), dont une cavité (C2, C3) à l'extrados et une cavité (C2, C3 ; C5) à l'intrados ne communiquent pas l'une avec l'autre et
dans laquelle l'aube (10 ; 50 ; 60) de turbine comprend des éléments (36, 30) de réglage de la pression de l'air de refroidissement entrant dans la cavité (C2, C3) à l'extrados et de l'air de refroidissement sortant de la cavité (C2, C3) à l'extrados,
**caractérisée en ce que** les éléments de réglage de la pression comprennent une plaque (36) d'incidence, en amont de l'air de refroidissement entrant dans la cavité (C2, C3) à l'extrados et disposée de manière à recouvrir un côté supérieur et/ou un côté inférieur des espaces formés dans la cavité (C2, C3) à l'extrados.

2. Aube (10 ; 50 ; 60) de turbine suivant la revendication 1, dans laquelle la plaque (36) d'incidence est en amont de l'air de refroidissement entrant dans la cavité (C2, C3) à l'extrados et disposée de manière à recouvrir un côté supérieur et/ou un côté inférieur d'espaces formés dans la cavité (C2, C3) à l'extrados, de manière à alimenter la cavité (C2, C3) à l'extrados seulement en de l'air de refroidissement passant à travers la plaque ou les plaques (36) d'incidence.

3. Aube (10 ; 50 ; 60) de turbine suivant la revendication 1 ou 2, dans laquelle les éléments de réglage de la pression comprennent une plaque (30) d'incidence, en amont de l'air de refroidissement sortant de la cavité (C2, C3) à l'extrados.

4. Aube (10 ; 50 ; 60) de turbine, dans laquelle une nervure (16) tabulaire, séparant l'intérieur d'une aile (11) aérodynamique en un intrados et en un extrados le long d'une ligne centrale reliant un bord d'attaque et un bord de fuite de l'aile (11) aérodynamique, est prévue dans une partie entre le bord d'attaque et le bord de fuite, de manière à former au moins deux cavités (C2, C3 ; C2, C3 ; C5), dont une cavité (C2, C.3) à l'extrados et une cavité (C2, C3 ; C5) à l'intrados ne communiquent pas l'une avec l'autre,
dans laquelle l'aube (10 ; 50 ; 60) de turbine comprend un passage pour de l'air de refroidissement à envoyer à la cavité (C2, C3 ; C5) à l'intrados et à faire sortir de trous (14) de refroidissement pelliculaire à l'intrados de l'aile (11) aérodynamique et un passage pour de l'air de refroidissement à envoyer à la cavité (C2, C3) à l'extrados et à faire sortir de trous (14) de refroidissement pelliculaire à l'extrados de l'aile (11) aérodynamique, les passages étant pourvus de moyens (30, 36) de réglage de la pression,
**caractérisée en ce que**
le nombre d'éléments (30) de réglage de la pression prévue dans le passage pour de l'air de refroidissement à envoyer à la cavité (C2, C3 ; C5) à l'intrados est plus petit que le nombre d'éléments (30, 36) de réglage de la pression prévue dans le passage pour de l'air de refroidissement à l'extrados et
l'élément de réglage de la pression prévue dans le passage pour l'air de refroidissement envoyé à la cavité (C2, C3) à l'extrados comprend la plaque (36) d'incidence prévue en amont de l'air de refroidissement entrant dans la cavité (C2, C3) à l'extrados et une plaque (30) d'incidence prévue en amont des trous (14) de refroidissement pelliculaire à l'extrados.

5. Aube de turbine suivant la revendication 4, dans laquelle l'élément de réglage de la pression prévue dans le passage pour l'air de refroidissement envoyé à la cavité (C2, C3 ; C5) à l'intrados comprend une plaque (30) d'incidence prévue en amont des trous (14) de refroidissement pelliculaire à l'intrados.

6. Turbine à gaz comprenant l'aube de turbine suivant l'une quelconque des revendications 1 à 5.

7. Turbine à gaz suivant la revendication 6, dans laquelle le diamètre des trous d'incidence des éléments (30, 36) de réglage de la pression des aubes de turbine varie entre des étages.
